(19) Europäisches Patentamt

European Patent Office

Office européen des brevets

(11) **EP 0 992 566 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(21) Anmeldenummer: **99116320.5**

(22) Anmeldetag: **19.08.1999**

(51) Int Cl.7: **C09K 21/14**, C03C 25/26,
C03C 25/28, C03C 25/24,
C09D 5/18, D04H 1/00,
E06B 5/16, E04B 1/94

(54) **Intumeszierende Laminate mit hohem Wärmedurchlasswiderstand**

Intumescent laminates with high thermal resistance

Laminés intumescents à haute résistance thermique

(84) Benannte Vertragsstaaten:
**AT BE CH DE FR GB IT LI NL SE**

(30) Priorität: **04.09.1998 AT 150198**

(43) Veröffentlichungstag der Anmeldung:
**12.04.2000 Patentblatt 2000/15**

(73) Patentinhaber: **Intumex Brandschutzprodukte AG**
**4021 Linz (AT)**

(72) Erfinder:
• **Horacek, Heinz**
**4040 Linz (AT)**

• **Pieh, Stefan**
**4060 Leonding (AT)**

(74) Vertreter: **Lindinger, Ingrid et al**
**DSM Fine Chemicals Austria GmbH**
**CEL/Patente**
**St. Peter-Strasse 25**
**4021 Linz (AT)**

(56) Entgegenhaltungen:
EP-A- 0 629 677      EP-A- 0 808 956
EP-A- 0 832 735      WO-A-98/00461
DE-A- 3 637 923      DE-U- 29 710 462
DE-U- 29 722 652      GB-A- 2 052 305

## Beschreibung

Die Verwendung von Intumeszenzmaterialien erfolgt im baulichen Brandschutz in Form von Anstrichen, Lakken, Beschichtungen, Pasten, Kitten, Mörteln, Dichtungen, Platten, Zuschnitten, Streifen, Schaumstoffen, Bahnen, Folien, Profilen und anderen Halbzeugen. Intumeszenzmaterialien sind solche, die unter Wärmeeinwirkung aufschäumen und einen isolierenden und feuerbeständigen Schaum bilden, der die darunterliegenden Flächen und Substanzen vor der Feuereinwirkung schützt.

Die klassische Dreiermischung besteht aus Kohlenstoffspendem, Dehydratisierungsmittel und Treibmittel.

Poröse Trägermaterialien die mit Intumeszenzmassen beschichtet sind, sind beispielsweise aus DE 27 03 022, DE 28 17 268, DE 28 27 828, US 4,375,516 oder DE 30 42 788 bekannt.

Die zitierten Patentanmeldungen behandeln durchwegs Materialien in Form von Schichtwerkstoffen, wie Platten, Folien oder Bahnen, die durch ihre geschlossene Oberfläche von vornherein für gewisse Bereiche, wie z.B. Schallschutz oder Brandabschottung offener Kanäle nicht geeignet sind.

Des weiteren zeigte sich, daß trotz der Vielzahl der auf dem Markt angebotenen Intumeszenzmaterialien eine zufriedenstellende Imprägnierung von mikroporösen Trägermaterialien derzeit nicht durchführbar ist.

Da in vielen potentiellen Einsatzbereichen die Bildung von Kondenswasser nicht ausgeschlossen werden kann, kommen von vornherein nur Imprägniermittel in Frage die wasserunlösliche oder zumindest schwerlösliche Verbindungen bilden. Damit beschränkt sich die Auswahl auf wenig Feuerschutzfarben und -lacke, die nach der Trocknung wasserfeste Filme bilden.

Tränkversuche von Mineralfaserplatten oder mikroporösen Melaminharzschäumen mit wasserfesten Feuerschutzfarben führten aber zu keinen technisch verwertbaren Ergebnissen. Die pulvrigen Feuerschutzkomponenten wurden an der Oberfläche der Trägermaterialien angereichert, während nur das Bindemittel in das Innere der Trägerplatten diffundierte. Nach der Trocknung bröselten die nur lose anhaftenden Feuerschutzkomponenten ab.

Auch durch die naheliegende Verwendung von nicht pigmentierten Feuerschutzlacken konnte keine gravierende Verbesserung erreicht werden. Mit diesen hochviskosen Formulierungen lassen sich mikroporöse Trägermaterialien nicht durchtränken. Erst nach entsprechender Rückverdünnung kam es zur Durchtränkung der Trägermaterialien. Nach der Trocknung waren aber die eingebrachten Anteile der Feuerschutzkomponenten zu niedrig, um bei den anschließenden Brandprüfungen zu positiven Ergebnissen zu führen.

In DE 297 10 462 U werden desweiteren Brandschutzmaterialien beschrieben, die aus einem flexiblen Trägermaterial bestehen, das mit einer intumeszierenden Substanz beschichtet ist. Als intumeszierende Substanz wird bevorzugt Blähgraphit verwendet. Alternativ können aber auch Phosphate, insbesondere Ammoniumpolyphosphat oder Ethylendiaminphosphat, oder eine Kombination aus Ammoniumpolyphosphat mit Melamin und Pentaerythrit oder Vermiculit oder Wasserglas als intumeszierende Substanzen eingesetzt werden.

Eigenschaften wie Wärmedurchlasswiderstand und Expansionsfaktor sind nicht beschrieben.

Aufgabe der vorliegenden Erfindung war es, flexible Laminate mit hohem Expansionsgrad und Wärmedurchlasswiderstand bereitzustellen, die obige Nachteile nicht aufweisen.

Unerwarteterweise konnte die Aufgabe durch ein Laminat aus einem Glasträgermaterial und einer speziellen Dreikomponentenschicht gelöst werden.

Gegenstand der Erfindung ist demnach ein intumeszierendes Laminat mit hohem Wärmedurchlasswiderstand, das dadurch gekennzeichnet ist, daß es aus einem Glasfaservlies oder -gewebe, beschichtet mit einer intumeszierenden Dreikomponenten-Masse enthaltend

    a) ein Umsetzungsprodukt aus Phosphorsäure, Ethylenglykol und Pentaerythrit
    b) eine Melaminverbindung
    und
    c) eine anorganische gerüstbildende Verbindung,

besteht.

Das erfindungsgemäße Laminat weist eine Beschichtung aus drei Komponenten auf. Als Komponente a) liegt ein Polyolphosphorsäureteilester vor.

Unter Polyolphosphorsäureteilester sind Verbindungen, die beispielsweise durch Veresterung von Polyolen mit Phosphorsäure oder Polyphosphorsäuren erhalten werden, zu verstehen. Dies sind erfindungsgemäß Umsetzungsprodukte aus Phosphorsäure, Ethylenglykol und Pentaerythrit.

Komponente b) ist eine Melaminverbindung aus der Gruppe Melamin, Hexamethoxymethylmelamin (HMMM), Dimelaminpyrophosphat, Melaminpolyphosphat, Melaminphosphat.

Bevorzugt wird HMMM oder Melamin eingesetzt.

Die dritte Komponente c) ist eine anorganische, gerüstbildende Verbindung aus der Gruppe Titandioxid, Aluminiumsilikat, Ton, Zinkborat, Kalziumborat, Natriumphosphat oder -silikat, Zeolith, Wollastonit, Borphosphat, Serpentin, Kaolin, Talk, Sepiolith, Erdalkali und Plagioklase, wie Albit und Anopthit.

Bevorzugt wird Titandioxid oder Aluminiumsilikat eingesetzt.

Komponente a) wird dabei in einer Menge von 5 bis 50 Gew.%, vorzugsweise von 10 bis 30 Gew.% verwendet. Der Anteil an Komponente b) liegt ebenfalls bei 5 bis 50 Gew.%, vorzugsweise 5 bis 30 Gew.%.

Komponente c) wird in einer Menge von 5 bis 30 Gew.%, vorzugsweise 5 - 20 Gew.% verwendet.

Es gilt die Maßgabe, daß die Summe der Komponenten a) bis c) jeweils 100 Gew.% ergibt.

Es kann dabei nur jeweils eine Verbindung pro Komponente eingesetzt werden, es können aber auch für eine oder mehrere der Komponenten 2 oder mehr der angeführten Verbindungen verwendet werden.

Die Dreikomponentenmasse kann gegebenenfalls übliche Hilfsmittel wie Netzmittel Entschäumer, Verdicker, Farbstoffe, Fungizide, Weichmacher, Bindemittel, Flammhemmer oder diverse Füllstoffe enthalten.

Der Anteil der einzelnen Zusätze liegt zwischen jeweils 0 und 10 Gew.%, vorzugsweise zwischen 0,1 und 6 Gew.%. Es ist dabei wiederum zu beachten, daß die Summe aller Bestandteile 100 Gew.% nicht übersteigt.

Als Hilfsmittel eignen sich beispielsweise u.a. handelsübliche Netzmittel auf Basis von Polyacrylaten und/ oder Polyphosphaten, Alginatverdicker, Silikonentschäumer;

Bindemittel wie etwa Polyvinyl-acetate, -alkohole, -butyrol- und -chlorid, Styrolacrylat, Vinyltoluolacetat u.s.w.; Weichmacher wie chlorhaltige Wachse,

Füllstoffe wie Vermiculit, anorganische Fasern, Quarzsand, Mikroglaskugeln, Glimmer, Siliziumdioxid, Mineralwolle u. s.w.; Flammhemmer wie etwa Phosphorsäureester, Hostaflam TPOP 920 (Clariant), Amgard V 490 (Albright + Wilson), Trisethylphosphat, Trischlorpropylphosphat u.s.w.

Die Beschichtung wird als Lösung bzw. Paste auf den Träger aufgebracht, sodaß der Komponentenmischung gegebenenfalls Wasser in einer Menge von10 bis 50 Gew.%, vorzugsweise 15 bis 45 Gew.% zugesetzt wird, wiederum mit der Maßgabe, daß die Summe aller Bestandteile 100 Gew.% nicht übersteigt.

Als Träger wird für das erfindungsgemäße Laminat ein Glasfaservlies oder ein Glasfasergewebe verwendet. Bevorzugt weist der Träger ein Flächengewicht zwischen 50 und 500 g/m$^2$ auf.

Die Beschichtung erfolgt auf einer horizontalen Streich- und Beschichtungs- (bzw. Trocknungs)anlage.

Die Temperatur während des Beschichtungsvorgangs liegt bei etwa 10 bis 30°C, die Trocknungstemperatur liegt bei etwa 70 bis 170°C.

Erfindungsgemäß werden Laminate mit einer von 0,5 - 15 mm bevorzugt. Die Gesamtdicke des Laminates liegt bevorzugt bei 1 bis 5 mm.

Die erfindungsgemäßen Laminate zeichnen sich durch einen hohen Wärmedurchlasswiderstand aus. Bei 800°C beträgt dieser Wert mehr als 0,3 Km$^2$/W. Weiters zeichnen sich die Laminate durch einen hohen Expansionsfaktor aus. So liegt dieser Faktor bei 300°C zumeist über 20. Die erfindugnsgemäßen Laminate eignen sich daher beispielsweise als Heißgasdichtung bei Brandschutztüren, als Feuerschutzvorhang bei Maueröffnungen, als Türblattfüllung als Umwicklung von Einzelkabeln und Kabeltrassen u.s.w.

Beispiel 1:

Auf einem Molteni-Mischer mit Planetenrührwerk wurden die einzelnen Komponenten der entsprechenden intumeszierenden Massen homogen gemischt. Die fertigen Pasten wurden anschließend auf eine horizontale Streich- und Trocknungsanlage aufgebracht und getrocknet. Die Trocknungstemperatur lag zwischen 70 und 120°C. Die Zusammensetzungen der einzelnen Mischungen ist aus den nachfolgenden Tabellen zu entnehmen.

Beispiel 1

| Einsatzstoff | Gew.% | Markenname/Firma | Gruppe |
|---|---|---|---|
| K 30 | 25 | DSM Chemie Linz | a |
| HMMM | 25 | U100/DSM Chemie Linz | b |
| Mikroglaskugeln (3000) | 9,1 | CP3/Potters Ballotini | |
| Mineralwolle | 9,1 | Inorphil 020/Langer | |
| Glimmer | 9,1 | Vermex SF/Vermica | |
| TiO$_2$ | 9,1 | Kronos | c |
| PVA | 13,6 | Mowilith DM 230 | |
| | Σ 100 | | |

K30: Umsetzungsprodukt aus Ethylenglykol, Pentaerythrit und Phosphorsäure

Die Ergebnisse der Prüfung der fertigen Laminate ist aus nachfolgender Tabelle ersichtlich:

| | Vlies |
|---|---|
| Farbe | weiß |
| Konsistenz | fest |
| Fl.Gew. | 2,09kg/m$^2$ |
| Schichtstärke | 1,85mm |
| spez. Gew. | 1,13g/cm$^3$ |
| Exp.H. | 50mm |
| Exp.F. | 1:27 |
| Flexibilität | |
| Dornbiegeprobe | |
| 75mm | i.O. |
| 50mm | i.O. |
| 25mm | i.O. |
| Glührückstand | |
| (450°,15min) | 69 % |
| (1000°,15min) | 55 % |
| Brandverhalten | B1 |
| Restfeuchte | 0,90% |
| Feuchtigkeitsaufnahme | 37 % |
| Wärmedurchlass widerstand (K.m$^2$/W) | 0,45 |

Fl.Gew.     Flächengewicht
Exp H     Expansionshöhe, unbelastet, 450°C, 15 min
Exp F     Expansiosfaktor = ExpH/Schichtstärke

Feuchtigkeitsaufnahme: direkt Wasserl. 20 Std.
Vlies: Microlith PM 10/2 (Fa. Schuller)

**Patentansprüche**

1. Intumeszierendes Laminat mit hohem Wärmedurchlasswiderstand, **dadurch gekennzeichnet, daß** es aus einem Glasfaservlies oder -gewebe, beschichtet mit einer intumeszierenden Dreikomponenten-Masse enthaltend

   a) ein Umsetzungsprodukt aus Phosphorsäure, Ethylenglykol und Pentaerythrit
   b) eine Melaminverbindung
   und
   c) eine anorganische gerüstbildende Verbindung,

   besteht.

2. Intumeszierendes Laminat nach Anspruch 1, **dadurch gekennzeichnet, daß** Komponente a) in einer Menge von 5 bis 50 Gew.%, Komponente b) in einer Menge von 5 bis 50 Gew.% und Komponente c) in einer Menge von 5 bis 30 Gew.% verwendet werden, mit der Maßgabe, daß die Summe der Komponenten 100 Gew. % ergibt.

3. Intumeszierendes Laminat nach Anspruch 1, **dadurch gekennzeichnet, daß** als Komponente b) eine Melaminverbindung aus der Gruppe Melamin, Hexamethoxymethylmelamin, Dimelaminpyrophosphat, Melaminpolyphosphat, Melaminphosphat eingesetzt wird.

**4.** Intumeszierendes Laminat nach Anspruch 1, **dadurch gekennzeichnet, daß** als Komponente c) eine anorganische, gerüstbildende Verbindung aus der Gruppe Titandioxid, Aluminiumsilikat, Ton, Zinkborat, Kalziumborat, Natriumphosphat oder -silikat, Zeolith, Wollastonit, Borphosphat, Serpentin, Kaolin, Talk, Sepiolith, Erdalkali und Plagioklase, wie Albit und Anopthit eingesetzt wird.

**5.** Verwendung von intumeszierendem Laminat nach Anspruch 1, als Heißgasdichtung bei Brandschutztüren als Feuerschutzvorhang bei Maueröffnungen, als Türblattfüllung oder als Umwicklung von Einzelkabeln und Kabeltrassen.

## Claims

**1.** Intumescent laminate with high heat transfer resistance, **characterized in that** it is composed of a glass-fibre web or glass-fibre fabric coated with a three-component intumescent composition comprising

    a) a reaction product of phosphoric acid, ethylene glycol and pentaerythritol
    b) a melamine compound
    and
    c) an inorganic framework-forming compound.

**2.** Intumescent laminate according to Claim 1, **characterized in that** the amounts used are from 5 to 50% by weight of component a), from 5 to 50% by weight of component b) and from 5 to 50% by weight of component c), with the proviso that all of the components together give 100% by weight.

**3.** Intumescent laminate according to Claim 1, **characterized in that** component b) is a melamine compound selected from the class consisting of melamine, hexamethoxymethylmelamine, dimelamine pyrophosphate, melamine polyphosphate and melamine phosphate.

**4.** Intumescent laminate according to Claim 1, **characterized in that** component c) is an inorganic framework-forming compound from the class consisting of titanium dioxide, aluminium silicate, clay, zinc borate, calcium borate, sodium phosphate, sodium silicate, zeolite, wollastonite, boron phosphate, serpentine, kaolin, talc, sepiolite, alkaline earth and plagioclases, such as albite and anopthite [sic].

**5.** Use of Intumescent laminate according to Claim 1 as a hot-gas seal for fire doors, as fire-protection curtaining for apertures in masonry walls, as door panels or as windings surrounding individual cables or cable runs.

## Revendications

**1.** Laminé intumescent à haute résistance thermique, **caractérisé en ce qu'**il est composé d'une fibre de verre non tissée ou tissée enduite d'une substance intumescente à trois composants qui contient

    d) un produit de la décomposition de l'acide phosphorique, de l'éthylène glycol et du pentaérythrite
    e) un composé mélaminé
    f) un composé à base minérale

**2.** Laminé intumescent selon la revendication 1, **caractérisé en ce que** le composant a) est utilisé dans une proportion de 5 à 50 % en poids, le composant b) est utilisé dans une proportion de 5 à 50 % en poids et le composant c) est utilisé dans une proportion de 5 à 30 % en poids, la contrainte étant que la somme des proportions des composants soit égale à 100 % en poids.

**3.** Laminé intumescent selon la revendication 1, **caractérisé en ce que** le composant b) utilisé est un composé mélaminé du groupe de la mélamine, de l'hexaméthoxyméthylmélamine, du pyrophosphate de dimélamine, du polyphosphate de mélamine et du phosphate de mélamine.

**4.** Laminé intumescent selon la revendication 1, **caractérisé en ce que** le composant c) utilisé est un composé à base minérale du groupe du dioxyde de titane, du silicate d'aluminium, de l'argile, du borate de zinc, du borate de calcium, du phosphate de sodium ou du silicate de sodium, de la zéolithe, de la wollastonite, du phosphate de bore, de la serpentine, du kaolin, du talc, de la sépiolithe, des oxydes alcalino-terreux et des plagioclases tels que l'albite et l'anorthite.

5. Utilisation du laminé intumescent selon la revendication 1 comme joint d'étanchéité contre les gaz chauds pour les portes coupe-feu, comme rideau de protection contre l'incendie pour les ouvertures dans les murs, comme panneau de battants de portes ou comme gaine de câble et de lignes électriques.